# FASCICULE DE BREVET EUROPEEN

(11) **EP 3 794 613 B1**
(45) Date de publication et mention de la délivrance du brevet: **13.11.2024**
(21) Numéro de dépôt: 19724821.4
(22) Date de dépôt: 16.05.2019
(51) Int. Cl.: G21C 13/036, G21C 11/08, G21C 15/12

(54) **RÉACTEUR NUCLÉAIRE ET CUVE DE RÉACTEUR NUCLÉAIRE ÉQUIPÉE D'UN CLAPET NON ÉJECTABLE**
KERNREAKTOR UND KERNREAKTORBEHÄLTER MIT NICHT AUSSTOSSBAREM VENTIL
NUCLEAR REACTOR AND NUCLEAR REACTOR VESSEL EQUIPPED WITH NON-EJECTABLE VALVE

(30) Priorité: 16.05.2018 FR 1854081
(43) Date de publication de la demande: 24.03.2021
(73) Titulaire: Société Technique pour l'Energie Atomique, 91190 Villiers Le Bacle (FR)
(72) Inventeur: CANDILLIER, Laurent, 13109 SIMIANE (FR); BRUN, Michel, 13109 SIMIANE-COLLONGUE (FR)
(74) Mandataire: Lavoix
(86) Numéro de dépôt international: PCT/EP2019/062677
(87) Numéro de publication internationale: WO 2019/219843

(56) Documents cités:
- DE-A1- 3 037 531
- JP-A- S6 473 296

## Description

La présente invention concerne en général les cuves de réacteur nucléaire équipée de clapets de sécurité.

La rupture des tuyauteries primaires aboutissant dans la cuve sous pression du réacteur, contenant le coeur, fait partie des accidents étudiés dans le rapport de sûreté. Sur les gros réacteurs nucléaires à eau pressurisée, équipés d'une ou plusieurs boucles primaires, la rupture des tuyauteries primaires et/ou de la liaison avec le pressuriseur reste l'événement de fuite primaire dimensionnant pour la sûreté.

Pour un réacteur intégré, dans lequel le circuit primaire est intégré dans la cuve sous pression, seules de petites tuyauteries aboutissent à la cuve. Celles-ci sont typiquement destinées à injecter de l'eau en cuve et non à en faire sortir. Ces tuyauteries sont donc prévues pour une utilisation monodirectionnelle entrante en cuve, comme par exemple les lignes d'injection de Sécurité.

Pour ces réacteurs intégrés, il est donc tout particulièrement intéressant d'avoir des dispositions de type clapet de non-retour, permettant de limiter le débit des brèches primaires consécutives à la rupture de ces tuyauteries, et donc tirer un maximum de profit du concept de réacteur intégré.

Il est alors de toute première importance de pouvoir démontrer que ce dispositif de clapet fonctionne quelle que soit l'hypothèse de défaillance sur la tuyauterie, et notamment qu'il ne peut pas être éjecté sous l'action de la pression primaire quelle que soit la localisation de l'agression sur la tuyauterie raccordée à la cuve sous pression d'une part, et soit situé en amont de la première zone de défaillance possible ou postulée de la ligne raccordée.

Le brevet US2013/0272478 décrit une solution permettant d'agencer un clapet sur une ligne raccordée à la cuve sous pression d'un réacteur intégré. Ce clapet est situé dans une bride rapportée sur la cuve. Cette disposition est plus favorable vis-à-vis de l'objectif mentionné ci-dessus que la solution plus traditionnelle consistant à agencer le clapet sur la ligne, à distance de la cuve sous pression.

La solution proposée par US2013/02722478 ne répond qu'incomplètement au besoin ci-dessus. Cette conception met en oeuvre une bride externe à la cuve dont le rôle est d'une part de positionner ce clapet et d'autre part d'assurer le raccordement cuve/tuyauterie. Dans la conception de US2013/0272478, cette bride est indispensable pour pouvoir visiter régulièrement ce clapet. En cas de défaillance de la bride, le clapet est éjecté et n'assure plus la fonction d'isolement.

DE 3037531 divulgue une cuve d'un réacteur nucléaire équipé d'un clapet engagé dans un passage traversant l'enveloppe de la cuve. Le passage comprend une portion ayant une section interne de taille inférieure à celle de la section externe du clapet, de telle sorte que le clapet ne peut pas être éjecté vers l'extérieur de la cuve.

Dans ce contexte, l'invention vise à proposer une cuve d'un réacteur nucléaire ne présentant pas les défauts ci-dessus.

A cette fin, l'invention selon un premier aspect porte sur une cuve de réacteur nucléaire selon la revendication 1.

Du fait que le tronçon d'extrémité interne présente sur toute sa longueur axiale une section interne perpendiculairement à l'axe central de taille supérieure à celle de la section externe du clapet, le clapet est susceptible d'être extrait du passage par l'intérieur de la cuve. Ceci permet d'effectuer la maintenance et les visites réglementaires.

Du fait que le tronçon d'extrémité externe du passage présente au moins une portion ayant une section interne perpendiculairement à l'axe central de taille inférieure à celle de la section externe du clapet, le clapet ne peut pas être éjecté vers l'extérieur de la cuve, quelles que soient les dispositions de raccordement de la tuyauterie à la cuve, et donc les défaillances associées.

L'analyse permettant de démontrer la sûreté d'un tel montage est simple et robuste.

Cette solution technique est adaptable à la plupart des types de clapet existants. Il est donc possible d'utiliser pour mettre en oeuvre l'invention des clapets standards ou dérivés de produits catalogue.

La cuve peut également présenter une ou plusieurs des caractéristiques énoncées dans les revendications dépendantes..

D'autres caractéristiques et avantages de l'invention ressortiront de la description qui en est donné ci-dessous, à titre indicatif et nullement limitatif, en référence aux figures annexées, parmi lesquelles :
- la figure 1 est une vue partielle en coupe d'une cuve sous pression de réacteur nucléaire selon l'invention, prise perpendiculairement à l'axe de la cuve ;
- la figure 2 est une vue en perspective et partiellement en coupe, montrant plus particulièrement une première variante de réalisation de la fixation démontable du clapet de la figure 1 ;
- la figure 3 est une vue en perspective et partiellement en coupe, montrant plus particulièrement une seconde variante de réalisation de la fixation démontable du clapet de la figure 1 ; et
- la figure 4 est une vue partielle en coupe de la cuve sous pression d'un réacteur nucléaire, prise dans un plan contenant l'axe de la cuve, montrant plus particulièrement un conduit interne participant au blocage en position du clapet.

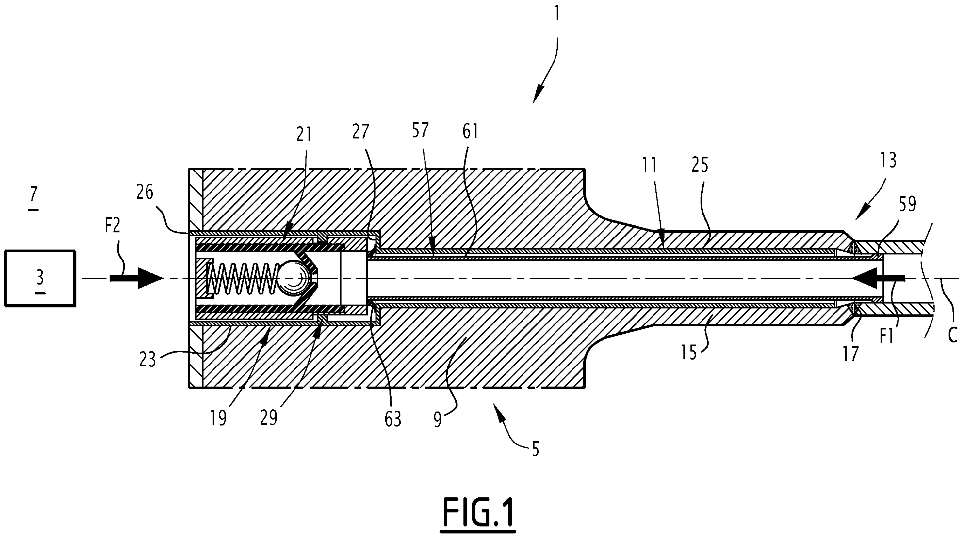

La cuve 1 représentée sur la figure 1 est intégrée dans un réacteur nucléaire. Typiquement, cette cuve 1 contient le coeur 3 du réacteur nucléaire. En variante, la cuve 1 n'est pas la cuve contenant le coeur du réacteur, mais est une autre cuve du réacteur nucléaire. Par exemple, la cuve est le pressuriseur du réacteur nucléaire, ou même une cuve n'appartenant pas au circuit primaire du réacteur nucléaire.

Le réacteur nucléaire est typiquement de type intégré. Dans ce cas, la cuve sous pression contient le circuit primaire. La cuve contient typiquement la ou les pompes primaires, le ou les échangeurs de chaleur dans lesquels le fluide primaire cède sa chaleur au fluide secondaire, le pressuriseur, etc.

Alternativement, le réacteur nucléaire n'est pas de type intégré. Le circuit primaire comporte alors une ou plusieurs boucles primaires, situées à l'extérieur de la cuve.

Le réacteur nucléaire est typiquement un réacteur à eau pressurisée. En variante, le réacteur nucléaire est de tout autre type adapté.

La cuve 1 comprend une enveloppe 5 délimitant un volume interne 7.

Typiquement, l'enveloppe 5 comporte une virole, fermée en partie inférieure par un fond inférieur et en partie supérieure par un couvercle démontable. Elle présente généralement un axe vertical.

L'enveloppe 5 a une paroi 9 traversée par au moins un passage 11 présentant un axe central C.

La paroi 9 fait typiquement partie de la virole. En variante, elle fait partie du couvercle ou du fond inférieur.

La cuve 1 comporte encore une tuyauterie 13, extérieure à l'enveloppe 5 et raccordée à la paroi 9, la tuyauterie 13 communiquant fluidiquement avec le volume interne 7 à travers le passage 11.

La tuyauterie 13 est prévue par exemple pour injecter un fluide dans la cuve 1 (flèche F1 de la figure 1). Par exemple, la tuyauterie 13 est raccordée au système d'injection de sécurité du réacteur nucléaire, prévu pour injecter de l'eau en cas de brèches sur une autre ligne débouchant dans la cuve.

En variante, la tuyauterie 13 est prévue pour extraire un fluide hors de la cuve 1 (flèche F2 de la figure 1). Par exemple, la tuyauterie 13 est raccordée au système de réfrigération à l'arrêt ou au système de contrôle de la physicochimie du fluide primaire.

Selon une autre variante, la tuyauterie 13 est prévue pour faire circuler le fluide dans les deux sens, soit vers l'intérieur de la cuve 1, soit vers l'extérieur de la cuve 1.

La cuve 1 comporte typiquement vers l'extérieur un bossage 15, sur lequel est fixée la tuyauterie 13. La tuyauterie 13 est typiquement fixée au bossage 15 par une soudure 17.

Le passage 11 traverse entièrement la paroi 9. Il est délimité par le bossage 15 à son extrémité externe.

Le passage 11 est typiquement rectiligne, son axe central C étant alors une droite. Par exemple, il s'étend radialement par rapport à l'axe de la cuve 1. La tuyauterie 13 prolonge le passage 11.

Le passage 11 est de préférence revêtu intérieurement par un chemisage 19. Ce chemisage 19 couvre toute la surface interne du passage 11, et est plaqué contre ladite surface interne. Il est prévu pour protéger la surface interne du passage du contact avec le fluide circulant dans le passage, de manière à éviter la corrosion. En variante, le passage 11 ne comporte pas de revêtement.

La cuve 1 comprend également un clapet 21 monté dans le passage 11.

Le clapet 21 est prévu pour sélectivement bloquer une circulation de fluide entre le volume interne 7 et la tuyauterie 13 à travers le passage 11. En fonction du système auquel est raccordée la tuyauterie 13, le clapet 21 est conçu pour bloquer la circulation de fluide :
- soit seulement quand le débit de fluide depuis le côté interne vers le côté externe du clapet est supérieur à une valeur déterminée ;
- soit quand le débit de fluide depuis le côté interne vers le côté externe du clapet est supérieur à une valeur déterminée et quand le débit de fluide depuis le côté externe vers le côté interne du clapet est supérieur à une autre valeur déterminée.

Dans le premier cas, le clapet fonction comme un clapet de non retour. Dans le second cas, le clapet est de type dynamique.

On entend ici par côtés interne et externe du clapet les côtés tournés respectivement vers l'intérieur de la cuve et vers la tuyauterie.

Le clapet est soit de type normalement ouvert, soit de type normalement fermé.

Le clapet 21 est de tout type adapté : à bille, à clapet, à papillon, à battant, etc.

Le passage 11 comporte un tronçon d'extrémité interne 23 débouchant dans le volume interne 7 et un tronçon d'extrémité externe 25 débouchant dans la tuyauterie 13, le clapet 21 étant logé dans le tronçon d'extrémité interne 23.

Le clapet 21 présente une section externe déterminée prise perpendiculairement à l'axe central C.

Le tronçon d'extrémité interne 23 présente sur toute sa longueur axiale une section interne, prise perpendiculairement à l'axe central C, de taille supérieure à celle de la section externe du clapet 21, de telle sorte que le clapet 21 est susceptible d'être extrait du passage 11 par l'intérieur de la cuve 1.

La section externe du clapet 21 peut être la même sur toute la longueur axiale de ce clapet. En variante, la section externe du clapet varie axialement le long de ce clapet. Dans ce dernier cas, on considère ici la section externe la plus grande.

La section interne du tronçon d'extrémité interne 23 peut être la même sur toute la longueur axiale de ce tronçon. En variante, la section interne du tronçon d'extrémité interne varie axialement le long de ce tronçon. Dans ce dernier cas, on considère ici la section interne la plus petite.

La section externe du clapet peut avoir la même forme que la section interne du tronçon d'extrémité interne 23 (toutes deux circulaires par exemple), ou au contraire une forme différente (une circulaire et l'autre non). En tout état de cause, la forme et la taille de la section interne et de la section externe sont choisies pour que le clapet puisse être déplacé d'une pièce, à partir de sa position normale jusqu'à l'ouverture 26 du tronçon d'extrémité interne 23 débouchant dans le volume interne 7.

Le tronçon d'extrémité externe 25 présente au moins une portion ayant une section interne, prise perpendiculairement à l'axe central C, de taille inférieure à celle de la section externe du clapet 21, de telle sorte que le clapet 21 ne peut pas être éjecté vers l'extérieur de la cuve 1.

Le tronçon d'extrémité externe 25 présente ladite section interne réduite, de taille inférieure à celle de la section externe du clapet 21, sur toute sa longueur axiale, comme illustré sur la figure 1. En variante, elle ne présente ladite section interne réduite que sur une partie de sa longueur, par exemple à son extrémité interne tournée vers l'intérieur de la cuve.

La section externe du clapet peut avoir la même forme que la section interne du tronçon d'extrémité externe 25 (toutes deux circulaires par exemple), ou au contraire une forme différente (une circulaire et l'autre non). En tout état de cause, la forme et la taille de la section interne et de la section externe sont choisies pour que le clapet ne puisse être déplacé d'une pièce, sous l'effet d'une surpression à l'intérieur de la cuve 1, à partir de sa position normale jusqu'à l'extrémité externe du tronçon 25, c'est-à-dire l'extrémité raccordée à la tuyauterie 13.

On considère ici que le tronçon d'extrémité interne 23 correspond à la partie du passage 11 s'étendant de l'ouverture 26 du passage 11 jusqu'à l'extrémité du clapet opposée à l'ouverture. On considère ici que le tronçon d'extrémité externe 25 correspond à la partie du passage 11 s'étendant de la portion de section réduite du passage 11 jusqu'à l'extrémité du passage 11 raccordée à la tuyauterie 13.

Dans l'exemple représenté, les tronçons d'extrémité interne et externe 23, 25 couvrent ensemble toute la longueur du passage 11. En variante, un tronçon intermédiaire est intercalé entre les tronçons interne et externe.

Ainsi, ladite portion ayant une section interne perpendiculairement à l'axe central C de taille inférieure à celle de la section externe du clapet 21 est un obstacle formé dans la matière constituant la paroi 9.

Il forme un obstacle au sens où il empêche le clapet 21 de passer vers l'extérieur du passage 21. Cet obstacle est particulièrement solide car il est formé par la paroi elle-même.

Avantageusement, le tronçon d'extrémité interne 23 est raccordé au tronçon d'extrémité externe 25 par un épaulement 27 ayant une section interne de taille inférieure à celle de la section externe du clapet 21.

Ainsi, en cas de surpression à l'intérieur de la cuve 1, le clapet 21 vient en appui contre l'épaulement 27 et ne peut pas être éjecté du passage.

L'épaulement 27 est formé dans la matière constituant la paroi 9.

La cuve 1 comprend une fixation 29 démontable du clapet 21, bloquant en position le clapet 21 par rapport à la paroi 9 axialement vers l'intérieur de la cuve 1.

Ainsi, la fixation démontable 29 empêche que le clapet 21 tombe dans la cuve 1 de manière involontaire, par exemple sous l'effet du débit induit par l'injection d'eau en cuve via la tuyauterie 13.

La fixation démontable 29 peut être réalisée de différentes manières.

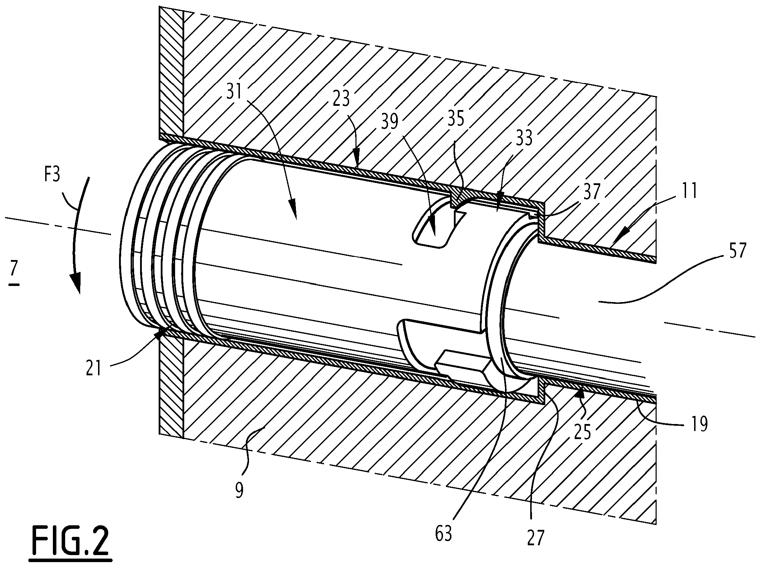

Selon une première variante de réalisation, la fixation démontable 29 fixe le clapet 21 à la paroi 9. Elle fixe le clapet directement à la paroi 9, ou au chemisage 19, lui-même solidaire de la paroi 9 Selon l'invention, la fixation démontable 29 est de type baïonnette, comme illustré sur les figures 1 et 2. Dans ce cas, la surface externe 31 du clapet comprend des rainures en L 33, le chemisage 19 portant des doigts 35 engagés libres en coulissement dans les rainures 33.

Chaque rainure 33 présente un tronçon droit 37 s'étendant axialement, et un tronçon circonférentiel 39 s'étendant en arc de cercle autour de l'axe central C. Le tronçon droit 37 est débouchant à une extrémité axiale tournée vers la tuyauterie 13, pour pouvoir introduire et extraire le doigt 35. Le tronçon circonférentiel 39 prolonge le tronçon droit 37 à partir d'une extrémité de celui-ci tournée vers le volume interne de la cuve. Tous les tronçons circonférentiels 39 sont orientés dans le même sens à partir du tronçon droit 37 correspondant.

Ainsi, le clapet peut être démonté en le faisant d'abord tourner autour de l'axe central C selon la flèche F3 de la figure 2, puis en le déplaçant axialement vers l'intérieur de la cuve 1. Le montage est effectué en sens inverse.

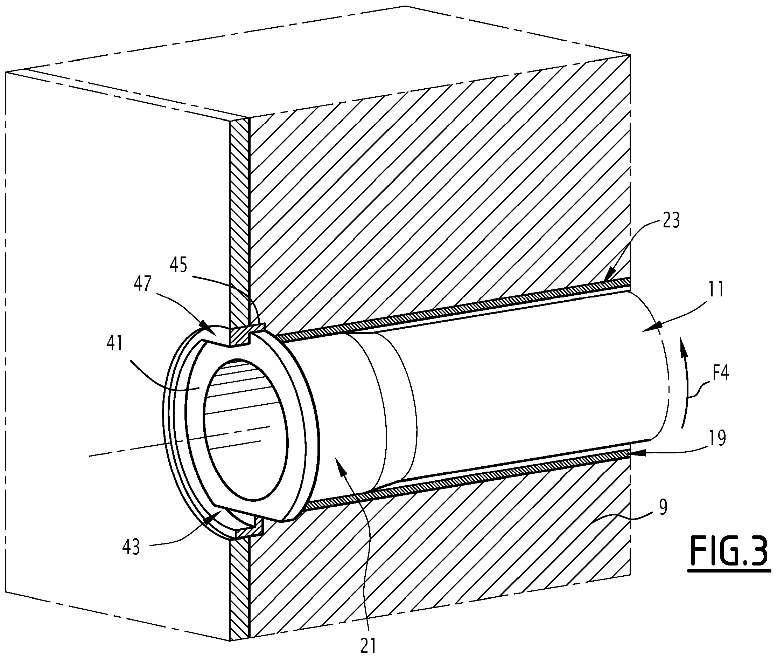

Alternativement, la fixation démontable 29 est du type illustré sur la figure 3. Le clapet porte à son extrémité interne une collerette sortante 41, dont le bord externe est coupé le long d'une corde 43.

L'ouverture interne du passage 11 est entourée par un lamage 45. Le chemisage 19 se prolonge à l'intérieur du lamage 45 et forme dans un secteur du lamage 45 une rainure de retenue 47.

La collerette sortante 41 est normalement placé dans le lamage 45, un secteur de la collerette étant engagé dans la rainure de retenue 47. La rainure de retenue 47 empêche le clapet 21 de se déplacer vers l'intérieur de la cuve.

Le clapet peut être démonté en le faisant d'abord tourner autour de l'axe central C selon la flèche F4 de la figure 3, pour placer le secteur coupé de la collerette au niveau de la rainure de retenue 47. Le clapet peut ensuite être déplacé axialement vers l'intérieur de la cuve 1. Le montage est effectué en sens inverse.

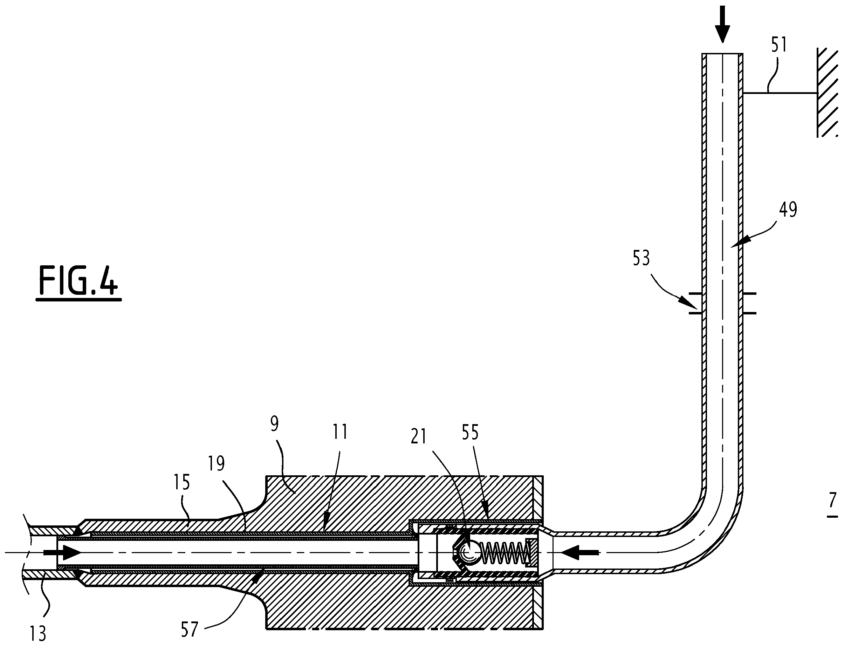

Selon une variante de réalisation, la cuve 1 comporte un conduit interne 49 situé dans le volume interne 7 et directement raccordé au clapet 21 (figure 4). Le conduit interne permet de transférer le fluide sortant du clapet en un autre point de la cuve 1, ou au contraire de conduire le fluide depuis ledit autre point de la cuve jusqu'au clapet 21.

Le conduit interne 49 est en communication fluidique avec la tuyauterie 13 à travers le clapet 21.

Le conduit interne 49 fait avantageusement partie de la fixation démontable 29.

Dans ce but, la fixation démontable 29 comporte de préférence un verrouillage 51 du conduit interne 49 sur un autre équipement interne de la cuve 1. Par exemple, il est fixé à l'enveloppe 5. Ainsi, le clapet est bloqué dans le passage 11 par le conduit interne 49, lui-même maintenu en position par rapport à la paroi 9 par le verrouillage 51.

Alternativement ou en plus, la fixation démontable 29 comporte un verrouillage 55 du conduit interne 49 sur la paroi 9, par exemple de type à baïonnette. Par exemple, l'extrémité du conduit interne 49 raccordé au clapet 21 est engagé dans le passage 11. Cette extrémité est fixée à la paroi par une baïonnette du même type que celle décrit plus haut.

La fixation démontable 29 comprend un ou plusieurs des dispositifs décrits ci-dessus. Par exemple, elle comprend la fixation à baïonnette ou à collerette du clapet 21 à la paroi 9, plus le conduit interne 49 équipé du verrouillage 51 et/ou du verrouillage 55.

La fixation démontable peut encore être de tout autre type adapté : raccord, pompier, obstacle agencé dans le volume interne 7 de la cuve 1 exclusivement dédié ou non au blocage du clapet, etc.

Avantageusement, il est prévu une interface 53 permettant la préhension et la manutention du clapet 21. Cet interface est ménagé par exemple sur le clapet 21, ou sur le conduit interne 49, ou à tout autre endroit approprié.

L'interface de préhension est de tout type adapté.

Selon encore un autre mode de réalisation de la fixation démontable 29, le maintien du clapet 21 dans son logement 23 est assuré par le positionnement dans la cuve 1 d'un interne qui interdit que le clapet puisse rentrer dans la cuve sous l'effet du débit d'injection d'eau. L'interne est typiquement un interne supérieur ou un panier. Il est disposé en face et à proximité de l'ouverture 26 du tronçon d'extrémité interne 23.

De préférence, une manchette de protection thermique 57 (figure 1) est fixée au clapet 21. La manchette de protection thermique 57 prolonge axialement le clapet 21 et est engagée dans le tronçon d'extrémité externe 25.

Son extrémité libre 59 est engagée dans la tuyauterie 13. Cette extrémité libre est plaquée contre la surface interne du conduit. Une lame de fluide 61 entoure ainsi le clapet 21 et la manchette 57. Elle isole thermiquement la surface interne du passage 11 du fluide circulant dans la tuyauterie 13 et dans le passage 11. Elle protège en particulier la soudure 17 de chocs thermiques susceptibles d'être provoqués par la circulation de fluides relativement froids.

La manchette 57 est solidaire du clapet 21 et forme un sous-ensemble démontable d'une pièce avec celui-ci.

Avantageusement, un joint d'étanchéité élastique 63 est interposé entre le clapet 21 et le passage 11.

Ce joint d'étanchéité est de tout type adapté: à lèvre déformable, à soufflet, etc.

Le joint est porté soit par le clapet 21, soit par la manchette de protection thermique 57, soit par la surface interne du passage 11, soit par le chemisage 19.

Le joint d'étanchéité 63 assure plusieurs fonctions.

Il assure une étanchéité relative entre le clapet 21 et la surface interne du passage 11 ou le chemisage 19. Il permet de rattraper les dilatations thermiques des pièces. Il limite par friction le déplacement du clapet par rapport à la paroi 9, et donc limite le risque de désengagement intempestif de la fixation démontable 29.

## Revendications

1. Cuve d'un réacteur nucléaire, la cuve (1) comprenant :
- une enveloppe (5) délimitant un volume interne (7), l'enveloppe (5) ayant une paroi (9) traversée par au moins un passage (11) présentant un axe central (C) ;
- une tuyauterie (13) extérieure à l'enveloppe (5) et raccordée à la paroi (9), la tuyauterie (13) communiquant fluidiquement avec le volume interne (7) à travers le passage (11);
- un clapet (21) monté dans le passage (11) et prévu pour sélectivement bloquer une circulation de fluide entre le volume interne (7) et la tuyauterie (13) à travers le passage (11), le clapet (21) ayant une section externe déterminée perpendiculairement à l'axe central (C);
le passage (11) ayant un tronçon d'extrémité interne (23) débouchant dans le volume interne (7) et un tronçon d'extrémité externe (25) débouchant dans la tuyauterie (13), le clapet (21) étant logé dans le tronçon d'extrémité interne (23);
le tronçon d'extrémité interne (23) présentant sur toute sa longueur axiale une section interne perpendiculairement à l'axe central (C) de taille supérieure à celle de la section externe du clapet (21), de telle sorte que le clapet (21) est susceptible d'être extrait du passage (11) par l'intérieur de la cuve (1);
le tronçon d'extrémité externe (25) présentant au moins une portion ayant une section interne perpendiculairement à l'axe central (C) de taille inférieure à celle de la section externe du clapet (21), de telle sorte que le clapet (21) ne peut pas être éjecté vers l'extérieur de la cuve (1) ;
la cuve (1) comprenant une fixation démontable (29) du clapet (21), bloquant en position le clapet (21) par rapport à la paroi (9) axialement vers l'intérieur de la cuve (1) ;
la fixation démontable (29) fixant le clapet à la paroi (9) ;
**caractérisée en ce que** la fixation démontable (29) est de type baïonnette.

2. Cuve selon la revendication 1, dans laquelle ladite portion ayant une section interne perpendiculairement à l'axe central (C) de taille inférieure à celle de la section externe du clapet (21) est un obstacle formé dans la matière constituant la paroi (9).

3. Cuve selon la revendication 1 ou 2, dans laquelle le tronçon d'extrémité interne (23) est raccordé au tronçon d'extrémité externe (25) par un épaulement (27) ayant une section interne de taille inférieure à celle de la section externe du clapet (21).

4. Cuve selon l'une quelconque des revendications précédentes, dans laquelle la cuve (1) comporte un conduit interne (49) situé dans le volume interne (7) et directement raccordé au clapet (21), le conduit interne (49) étant en communication fluidique avec la tuyauterie (13) à travers le clapet (21), le conduit interne (49) faisant partie de la fixation démontable (49).

5. Cuve selon la revendication 4, dans laquelle la fixation démontable (29) comporte un verrouillage (51) du conduit interne (49) sur un autre équipement interne de la cuve (1).

6. Cuve selon la revendication 4, dans laquelle la fixation démontable (29) comporte un verrouillage (55) du conduit interne (49) sur la paroi (9), par exemple de type à baïonnette.

7. Cuve selon l'une quelconque des revendications précédentes, dans laquelle un joint d'étanchéité élastique (63) est interposé entre le clapet (21) et le passage (11).

8. Cuve selon l'une quelconque des revendications précédentes, dans laquelle une manchette de protection thermique (57) est fixée au clapet (21), la manchette de protection thermique (57) prolongeant axialement le clapet (21) et étant engagée dans le tronçon d'extrémité externe (25).

9. Cuve selon la revendication 8, dans laquelle une extrémité libre (59) de la manchette de protection thermique (57) est engagée dans la tuyauterie extérieure (13), une lame de fluide (61) entourant la manchette (57) et isolant thermiquement une surface interne du passage (11) du fluide circulant dans la tuyauterie (13) et dans le passage (11).

## Patentansprüche

1. Behälter eines Kernreaktors, wobei der Behälter (1) umfasst:
- eine Hülle (5), die ein Innenvolumen (7) begrenzt, wobei die Hülle (5) eine Wand (9) hat, die von mindestens einem Durchgang (11) durchquert wird, der eine Mittelachse (C) aufweist;
- eine Rohrleitung (13), die außerhalb der Hülle (5) liegt und mit der Wand (9) verbunden ist, wobei die Rohrleitung (13) durch den Durchgang (11) hindurch mit dem Innenvolumen (7) fluidisch in Verbindung steht;
- ein Ventil (21), das in dem Durchgang (11) angebracht und vorgesehen ist, eine Fluidzirkulation zwischen dem Innenvolumen (7) und der Rohrleitung (13) durch den Durchgang (11) hindurch selektiv zu blockieren, wobei das Ventil (21) einen Außenquerschnitt aufweist, der senkrecht zur Mittelachse (C) bestimmt ist;
wobei der Durchgang (11) einen inneren Endabschnitt (23), der in das Innenvolumen (7) mündet, und einen äußeren Endabschnitt (25), der in die Rohrleitung (13) mündet, aufweist, wobei das Ventil (21) in dem inneren Endabschnitt (23) untergebracht ist;
wobei der innere Endabschnitt (23) über seine gesamte axiale Länge einen Innenquerschnitt senkrecht zur Mittelachse (C) aufweist, der größer ist als der Außenquerschnitt des Ventils (21), so dass das Ventil (21) aus dem Durchgang (11) vom Inneren des Behälters (1) aus herausgezogen werden kann;
wobei der äußere Endabschnitt (25) mindestens einen Abschnitt mit einem Innenquerschnitt senkrecht zur Mittelachse (C) aufweist, der kleiner als der Außenquerschnitt des Ventils (21) ist, so dass das Ventil (21) nicht nach außerhalb aus dem Behälter (1) ausgestoßen werden kann;
wobei der Behälter (1) eine lösbare Befestigung (29) des Ventils (21) umfasst, die das Ventil (21) in Bezug auf die Wand (9) axial zum Inneren des Behälters (1) hin in seiner Position blockiert;
wobei die demontierbare Befestigung (29) das Ventil an der Wand (9) befestigt;
**dadurch gekennzeichnet, dass** die demontierbare Befestigung (29) vom Typ Bajonett ist.

2. . Behälter nach Anspruch 1, wobei der Abschnitt, der einen Innenquerschnitt hat, der senkrecht zur Mittelachse (C) kleiner ist als der Außenquerschnitt des Ventils (21), ein Hindernis ist, das in dem die Wand (9) bildenden Material ausgebildet ist.

3. . Behälter nach Anspruch 1 oder 2, wobei der innere Endabschnitt (23) mit dem äußeren Endabschnitt (25) durch einen Absatz (27) verbunden ist, dessen Innenquerschnitt kleiner ist als der Außenquerschnitt des Ventils (21).

4. . Behälter nach einem der vorhergehenden Ansprüche, wobei der Behälter (1) eine innere Leitung (49) aufweist, die sich im Innenvolumen (7) befindet und direkt mit dem Ventil (21) verbunden ist, wobei die innere Leitung (49) über das Ventil (21) in Fluidverbindung mit der Rohrleitung (13) steht, wobei die innere Leitung (49) Teil der demontierbaren Befestigung (49) ist.

5. . Behälter nach Anspruch 4, wobei die demontierbare Befestigung (29) eine Verriegelung (51) der inneren Leitung (49) an einer anderen Innenausstattung des Behälters (1) umfasst.

6. . Behälter nach Anspruch 4, wobei die demontierbare Befestigung (29) eine Verriegelung (55) der inneren Leitung (49) an der Wand (9) z. B. vom Bajonett-Typ umfasst.

7. . Behälter nach einem der vorhergehenden Ansprüche, wobei eine elastische Dichtung (63) zwischen dem Ventil (21) und dem Durchgang (11) angeordnet ist.

8. . Behälter nach einem der vorhergehenden Ansprüche, wobei eine Wärmeschutzmanschette (57) am Ventil (21) befestigt ist, wobei die Wärmeschutzmanschette (57) das Ventil (21) axial verlängert und in den äußeren Endabschnitt (25) eingreift.

9. . Behälter nach Anspruch 8, wobei ein freies Ende (59) der Wärmeschutzmanschette (57) in die äußere Rohrleitung (13) eingreift, wobei eine Fluidlamelle (61) die Manschette (57) umgibt und eine Innenfläche des Durchgangs (11) von dem in der Rohrleitung (13) und im Durchgang (11) zirkulierenden Fluid thermisch isoliert.

## Claims

1. A vessel for a nuclear reactor, the vessel (1) comprising:
- a shell (5) delimiting an inner volume (7), the shell (5) having a wall (9) traversed by at least one passage (11) having a central axis (C);
- a piping (13) outside the shell (5) and connected to the wall (9), the piping (13) fluidly communicating with the inner volume (7) through the passage (11);
- a valve (21) mounted in the passage (11) and provided to selectively block a circulation of fluid between the inner volume (7) and the piping (13) through the passage (11), the valve (21) having a given outer cross-section perpendicularly to the central axis (C);
the passage (11) having an inner end segment (23) that opens into the inner volume (7) and an outer end segment (25) that opens into the piping (13), the valve (21) being housed in the inner end segment (23);
the inner end segment (23) having, over its entire axial length, an inner cross-section perpendicular to the central axis (C) that is larger than the outer cross-section of the valve (21), such that the valve (21) is capable of being extracted from the passage (11) through the inside of the vessel (1);
the outer end segment (25) having at least one portion having an inner cross-section, perpendicular to the central axis (C), that is smaller than the outer cross-section of the valve (21), such that the valve (21) cannot be ejected out of the vessel (1);
the vessel (1) comprising a removable fastener (29) for the valve (21), blocking the valve (21) in position relative to the wall (9) axially toward the inside of the vessel (1);
the removable fastener (29) fastening the valve to the wall (9);
**characterized in that** the removable fastener (29) is of the bayonet type.

2. The vessel according to claim 1, wherein said portion having an inner cross-section, perpendicular to the central axis (C), that is smaller than the outer cross-section of the valve (21) is an obstacle formed in the material making up the wall (9).

3. The vessel according to claim 1 or 2, wherein the inner end segment (23) is connected to the outer end segment (25) by a shoulder (27) having an inner cross-section smaller than the outer cross-section of the valve (21).

4. The vessel according to any one of the preceding claims, wherein the vessel (1) includes an inner duct (49) located in the inner volume (7) and directly connected to the valve (21), the inner duct (49) being in fluid communication with the piping (13) through the valve (21), the inner duct (49) being part of the removable fastener (49).

5. The vessel according to claim 4, wherein the removable fastener (29) includes a lock (51) for locking the inner duct (49) on another piece of inner equipment of the vessel (1).

6. The vessel according to claim 4, wherein the removable fastener (29) includes a lock (55) for locking the inner duct (49) on the wall (9), for example of the bayonet type.

7. The vessel according to any one of the preceding claims, wherein a resilient sealing gasket (63) is inserted between the valve (21) and the passage (11).

8. The vessel according to any one of the preceding claims, wherein a thermal protection sleeve (57) is fastened to the valve (21), the thermal protection sleeve (57) axially extending the valve (21) and being engaged in the outer end segment (25).

9. A vessel according to claim 8, wherein a free end (59) of the thermal protection sleeve (57) is engaged in the outer piping (13), a fluid knife (61) surrounding the sleeve (57) and thermally insulating an inner surface of the passage (11) for the fluid circulating in the piping (13) and in the passage (11).
